Europäisches Patentamt

**European Patent Office**

**Office européen des brevets**

(11) Publication number: **0 206 243**
A1

(12) **EUROPEAN PATENT APPLICATION**

(21) Application number: **86108317.8**

(22) Date of filing: **19.06.86**

(51) Int. Cl.⁴: **F 16 B 19/10**

(30) Priority: **24.06.85 US 748379**

(43) Date of publication of application: **30.12.86**
**Bulletin 86/52**

(84) Designated Contracting States: **DE FR GB IT**

(71) Applicant: **The BFGoodrich Company, 500 South Main Street, Akron Ohio 44318 (US)**

(72) Inventor: **Shackelford, James Russell, 225 Lincoln Avenue Cuvahoga Falls, Ohio 44221 (US)**

(74) Representative: **Selting, Günther, Dipl.-Ing. et al, Deichmannhaus am Hauptbahnhof, D-5000 Köln 1 (DE)**

(54) **Blind fastener.**

(57) A one-piece blind fastener (10) having a head (15) and a tubular body portion (21) which body portion (21) has a central threaded bore (23) therethrough. Such head (15) rests against a plate structure (11) so that a draw rod (36) can upset the tubular body (21) to secure the plate structure (11) against the head (15). The tubular body (21) serves as a nut plate. A flanged portion (16) extends laterally from the head (15) and contains an opening (30) to accommodate a rivet (45) that secures the fastener (10) to the plate structure (11) and permits torquing a bolt into and out of said threaded bore (23).

- 1 -

0206243

# BLIND FASTENER

## BACKGROUND OF THE INVENTION

This invention relates to fasteners and more particularly to thread locking type blind fasteners that can be installed entirely from one side of a structure wherein provision is made to suitably anchor such fastener to permit torquing of the fastener without encountering any spin of the fastener. Such blind fasteners are used where it is not practical or possible to drill and tap the structure or where the other side of the structure is non-accessible.

Various designs of blind fasteners consisting of threaded tubular bodies which can be inserted through a hole in a structure and expanded to bear against the back or blind side of the structure such that the threaded portion will function as a stationary nut for fastening the desired external component. The upsetting process which expands that portion of the fastener against the back surface of the structure must be secure enough and complete to prevent future rotation of the fastener itself when rotating the screw, which may be repeated several times. Problems of rotation of the fastener occur only after repeated removal and replacement of the screw where repeated torquing of the screw is made. Such is particularly true of the thread locking type wherein the lower portion of the internally threaded portion is of a slightly smaller diameter to assure a firm threaded engagement so that the attaching bolt does not work loose. In these instances there may be a tendency to rotate the blind fastener. The present invention contemplates the provision of an off-setting surface portion of the

- 2 -    0206243

fastener which can accommodate a rivet to anchor the fastener in place and thus permit considerable torquing of the fastener body and its corresponding screw component.  Such fastener is simple in construction and inexpensive, providing for maximum strength against pulling out of the hole or against slippage if there were insufficient bearing surface and the fastener rotated on its own when the screw were rotated.

## SUMMARY OF THE INVENTION

A blind fastener having a tubular body and a head with a laterally extending flange portion that has an opening therein.  The axis of the opening is parallel to a threaded bore in such tubular body. The tubular body is insertable into a hole of a structure such as a plate with the head seated against the structure.  A draw rod is threaded into the threaded bore of the tubular body and tensioned to upset the tubular body thereby expanding the body as it is drawn toward the structure to effectively capture the blind fastener to the structure which has the head bearing on one side of the structure and the expanded portion bearing on the other or blind side of the structure.  The opening in the flanged portion receives a rivet to securely fasten such blind fastener to the structure to facilitate the torquing of the blind fastener when attaching a bolt to the central bore thereof.

## BRIEF DESCRIPTION OF THE DRAWINGS

In the accompanying drawings,

Fig. 1 is an enlarged side elevational view partly in cross section of the blind fastener;

Fig. 2 is an enlarged plan view of the blind fastener;

Fig. 3 is a side elevational view of the blind fastener installed with a portion thereof in cross section illustrating the fastener in an installed condition;

Fig. 4 is a side elevational view of the blind fastener positioned for installation with the fastener tool in position prior to the upsetting of the fastener;

Fig. 5. is a side elevational view of the blind fastener installed illustrating the upset portion of the fastener prior to anchoring of the fastener;

Fig. 6 is a side elevational view of the blind fastener installed with the fastener upset and access hole off center receiving a blind rivet prior to upsetting by a rivet gun which is illustrated in phantom lines.

## DETAILED DESCRIPTION

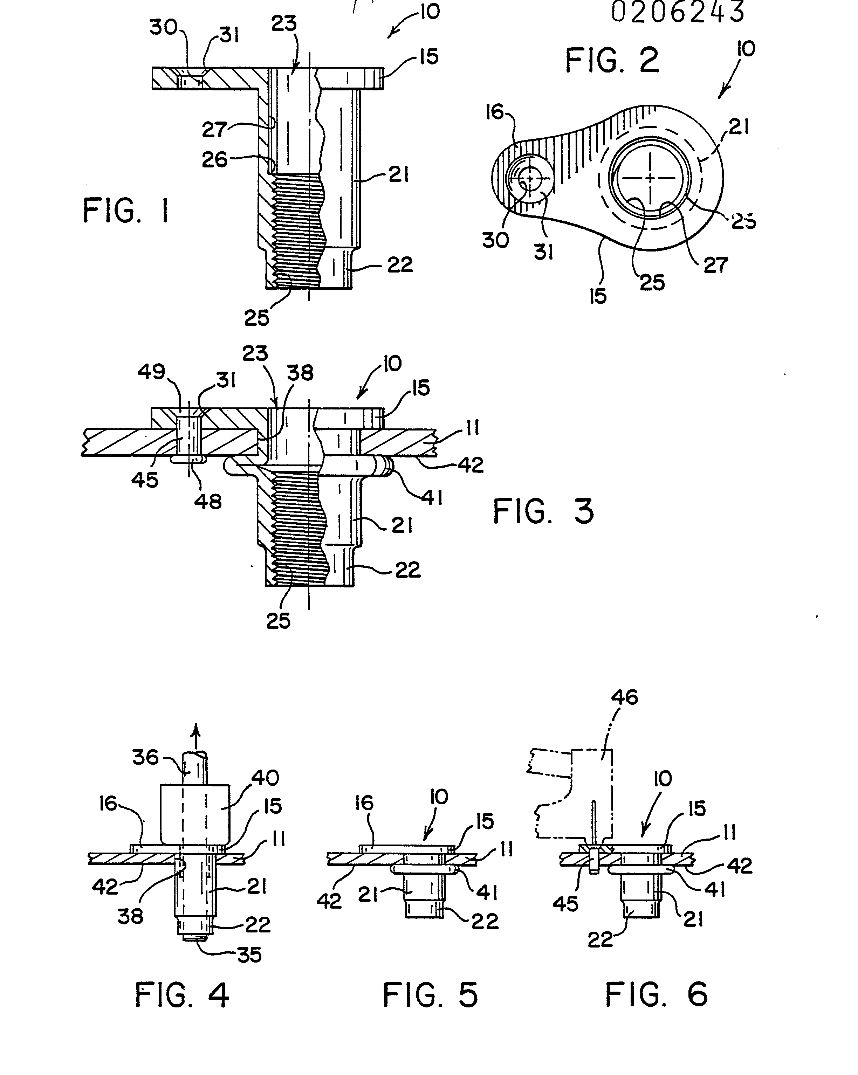

Referring to the drawings wherein like reference numerals refer to like elements in the several views, there is shown in Fig. 1 a blind fastener 10 intended to serve as a nut plate for a screw to hold an external component to a sheet metal or similar structure 11. The blind fastener 10 has a head 15 that is tear dropped in shape (in plan view) having a laterally extending flange portion 16.

The fastener 10 has a longitudinal extending shank or hollow cylindrical body 21 and a reduced outside diameter cylindrical end portion for thread locking 22. The length of the hollow body 21 is over twice its diameter. The bore 23 of the hollow cylindrical body 21 is of stepped diameter with the smallest diameter at the end farthest from the head, as at cylindrical end portion 22 where it is tapped to produce threads 25 for reception of the draw rod

- 4 -                                    0206243

and later of the fastening bolt or screw. That
portion of the bore 23 adjacent to the intermediate
portion of the hollow body 21 is formed with an
off-set 26 defining an upper bore portion of reduced
thickness 27 that is larger in diameter than the
threaded portion 25. The threaded portion 25 extends
upward to the off-set 26 but has a slightly greater
internal diameter as it extends upwardly to provide
for a thread locking fit at end portion 22.
Longitudinal slits may be provided in the upper body
portion of the fastener as defined by the upper bore
portion 27 to facilitate the upsetting of the
cylindrical body portion of the fastener.

The laterally extending flanged portion 16
of the head 15 has a bore or opening 30 extending
therethrough with a chamfered portion 31 at the upper
end portion.

The fastener 10 is installed by screwing it
onto the tip 35 of a high strength threaded draw rod
36 and is inserted through a hole 38 in structure 11
of the sheet metal or other material of limited
thickness, with the head 15 and flanged portion 16
bearing against the visible or upper face of
structure 11. A non-rotatable anvil 40 (Fig. 4) is
inserted over the draw rod 36 and bears against the
head 15 of fastener 10 as an upward tension is
applied to the draw rod 36. The longitudinal
pressure in the direction of the head at off-set 26
will be centered at about the mid-point of the
thickness of the wall in the portion of the reduced
thickness 27. As upward tension is exerted the shank
21 will be caused to fold outwardly in the location
of the off-set 26. As the draw rod 36 is moved
upwardly, the shank will be upset or buckle until
such buckled portion designated 41 (Fig. 3) is

- 5 -                                    0206243

applied firmly against the blind surface 42 of the structure through which it is installed.

Thereafter the sheet metal structure 11 directly in line with the bore 30 of the laterally extending flanged portion 16 is drilled through and rivet 45 is inserted therein. A suitable rivet upsetting tool or rivet gun 46 is used to upset rivet 45 effecting a bulging of the bottom portion 48 of the rivet 45 with its tapered head 49 firmly seated within the recessed or the chamfered portion 31 of the upper end portion of bore 30. The blind fastener 10 is now ready for receiving a screw to secure an external component to the structure 11 which can be firmly secured and torqued.

Various modifications are contemplated and may obviously be resorted to by those skilled in the art without departing from the described invention, as hereinafter defined by the appended claims, as only a preferred embodiment thereof has been disclosed.

CLAIMS

1. A blind fastener of the type having a head and a tubular body, said tubular body being integral with said head, said tubular body capable of passing through a hole in a structure and capable of being reshaped for engagement with the blind surface of the structure by tension on a draw rod insertable and removable through said head, characterized in that said tubular body has a threaded bore for receiving a threaded member, said head having a flanged portion, said flanged portion having an opening whose axis is parallel to the axis of said threaded bore, and said opening operative to receive a rivet which fastens said flanged portion to such structure to permit torquing of such threaded member into said threaded bore.

2. A blind fastener as set forth in claim 1 wherein said opening is chamfered to receive the head portion of a rivet to thereby maintain the top surface portion of said rivet head flash with the top surface of said head.

3. A blind fastener as set forth in claim 2 wherein said tubular body of said fastener.has a reduced wall thickness adjacent the uppermost end of said fastener to facilitate buckling of said fastener.

4. A blind fastener as set forth in claim 3 wherein the plan view of said head with said flanged portion is generally tear drop in shape.

5. A blind fastener as set forth in claim 4 wherein said threaded bore has a smaller internal diameter at the lowermost end portion thereof than the remainder of said threaded bore to provide for thread locking.

6. A blind fastener having a head and a tubular body, said tubular body being integral with said head wherein said head rests against a structure while said tubular body extends through a hole in said structure, said tubular body having a reduced wall thickness below said head to facilitate the upsetting and bulging of said tubular body and for engagement with said structure, said tubular body having a threaded bore for receiving a theaded draw rod for upsetting said tubular body, said head having an opening whose axis is parallel to the axis of said threaded bore, and said opening being operative to receive a rivet which fastens said head to such structure to facilitate torquing of saic blind fastener when said threaded bore receives a bolt for rotation therein.

7.    A blind fastener as set forth in claim 6 wherein said tubular body has a reduced wall thickness at the lowermost end portion thereof, and said threaded bore of said end portion is smaller in internal diameter than the remainder of said threaded bore.

8.    A blind fastener as set forth in claim 6 wherein said head has a laterally extending flange portion that receives said opening.

9.    A blind fastener as set forth in claim 8 wherein said opening in said laterally extending flange portion is recessed to receive the head of said rivet.

0206243

FIG. 1

FIG. 2

FIG. 3

FIG. 4

FIG. 5

FIG. 6

**European Patent Office**

**EUROPEAN SEARCH REPORT**

| DOCUMENTS CONSIDERED TO BE RELEVANT | | | EP 86108317.8 |
|---|---|---|---|
| Category | Citation of document with indication. where appropriate, of relevant passages | Relevant to claim | CLASSIFICATION OF THE APPLICATION (Int. Cl.4) |
| A | <u>DE - A1 - 3 245 055</u> (DAIMLER-BENZ AG) <br> * Fig.; claims 1,2 * <br> -- | 1 | F 16 B 19/10 |
| A | <u>DE - A - 1 775 430</u> (MOORE, ANTHONY W.) <br> * Fig. 1-5; claim 1 * <br> -- | 1 | |
| A | <u>GB - A - 1 490 508</u> (TEXTRON, INC.) <br> * Fig. 1,2; claim 1 * <br> -- | 1 | |
| A | <u>US - A - 4 457 652</u> (JOHN D. PRATT) <br> * Fig. 1-5; columns 3,4 * <br> ---- | 1,2 | |
| | | | **TECHNICAL FIELDS SEARCHED (Int. Cl.4)** |
| | | | F 16 B |

The present search report has been drawn up for all claims

| Place of search | Date of completion of the search | Examiner |
|---|---|---|
| VIENNA | 11-09-1986 | HEIN |